(19) Europäisches Patentamt
European Patent Office
Office européen des brevets

(11) Veröffentlichungsnummer: **0 592 934 A2**

# (12) EUROPÄISCHE PATENTANMELDUNG

(21) Anmeldenummer: **93116145.9**

(22) Anmeldetag: **06.10.93**

(51) Int. Cl.$^5$: **C08F 20/38**, G02B 1/04

(30) Priorität: **10.10.92 DE 4234256**

(43) Veröffentlichungstag der Anmeldung:
**20.04.94 Patentblatt 94/16**

(84) Benannte Vertragsstaaten:
**AT BE CH DE DK ES FR GB IT LI NL SE**

(71) Anmelder: **RÖHM GMBH**
**Kirschenallee**
**D-64275 Darmstadt(DE)**

(72) Erfinder: **Bader, Martina Dr.**
**Karlstrasse 1c**
**D-64347 Griesheim(DE)**
Erfinder: **Kerscher, Volker Dr.**
**Waldstrasse 58**
**D-64354 Reinheim(DE)**

## (54) Hochlichtbrechende Kunststoffe.

(57) Die Erfindung betrifft hochlichtbrechende Kunststoffe hergestellt durch Umsetzung von Alkylpolythiolen mit mehrfach ungesättigten Monomeren, wobei man Alkylthiole (A) mit mindestens 2 und bis zu 20 Kohlenstoffatomen, die mindestens 2 Thiolgruppen im Molekül enthalten, mit Alkylpolythiolestern (B) mit mindestens 2 und bis zu 14 Kohlenstoffatomen im Alkylrest, die mindestens 2 mit (Meth)acrylsäure veresterte Thiolgruppen im Molekül besitzen, unter den Bedingungen einer radikalinitiierten Polymerisation umsetzt, mit der Maßgabe, daß das numerische Verhältnis von Mercaptogruppen in (A) zu den Doppelbindungen in (B) ≦ 1 beträgt.

EP 0 592 934 A2

Gebiet der Erfindung

Die Erfindung betrifft hochlichtbrechende Kunststoffe, hergestellt durch Umsetzung von Alkylpolythiolen mit Alkylpolythiolestern der (Meth)acrylsäure unter den Bedingungen der radikalischen Polymerisation.

Stand der Technik

Ein hohes Lichtbrechungsvermögen ist äußerst vorteilhaft für Kunststoffe, die in optischen Elementen Verwendung finden sollen.
Diese Materialeigenschaft kann z.B. durch Einbau von Schwefelatomen in den Kunststoff erreicht werden. Eine Möglichkeit, Schwefel in eine Polymerkette einzubauen, geht aus von der Thiol-Addition an org. Isocyanate. So werden in den Patentanmeldung EP-A 0 235 743, EP-A 0 330 363 und EP-A 0 351 073 Polymere als hochlichtbrechende Kunststoffe vorgeschlagen, die aus Polythiolen und Polyisocyanaten bzw. aus schwefelhaltigen Polyisocyanaten bzw. Polyisothiocyanaten hergestellt worden sind.
Derartige Polyurethanderivate weisen jedoch in der Regel eine zu hohe Dispersion des Lichts auf, ausgenommen die Polymerisate mit halogenhaltigen, aromatischen Dithiolen, wobei jedoch der Halogengehalt Nachteile bei der Verarbeitung und hinsichtlich der Toxizität mit sich bringt. Die Thiol-En-Addition kann ebenfalls zur Herstellung optischer Materialien herangezogen werden, z.B. in Form der Additionsprodukte von Polythiolen an mehrfach ungesättigten Verbindungen. In diesem Sinne finden z.B. Dimethacrylate bifunktioneller Alkohole Verwendung (vgl. z.B. EP-A 437 374, EP-A 284 374). Derartige Materialien besitzen jedoch eine zu niedrige Brechzahl. Die in der EP-A 394 495 beanspruchten Polymerisate besitzen eine sehr hohe Brechzahl (> 1,65), jedoch bedingt das aromatische Dien(4,4'-Bis(meth)acryloylthio)diphenylsulfid) eine hohe Dispersion des Lichts.

Aufgabe und Lösung

Die schwefelhaltigen Polymeren des Standes der Technik konnten unter dem Aspekt der Eignung als optische Komponenten oder in mechanischer Hinsicht nicht voll befriedigen.
Es bestand daher die Aufgabe, transparente, farblose Kunststoffe mit hoher Brechzahl und gleichzeitig hoher Abbezahl zur Verfügung zu stellen.
Es wurde nun gefunden, daß sich durch Umsetzung von Polythiolen mit mehrfunktionellen Alkylthio(meth)-acrylaten unter gleichzeitig verlaufender Polymerisation und Polyaddition transparente farblose Polymere mit sehr guten optischen Eigenschaften gewinnen lassen.
Die vorliegende Erfindung betrifft somit hochlichtbrechende Kunststoffe K, hergestellt durch Umsetzung von Polythiolen mit mehrfach ungesättigten Monomeren, wobei man Thiole (A) mit mindestens 2 und bis zu 20 Kohlenstoffatomen im Alkylrest, die mindestens 2 Thiolgruppen im Molekül enthalten, mit Alkylpolythiolestern (B) mit mindestens 2 und bis zu 24, vorzugsweise bis zu 12 Kohlenstoffatomen im Alkylrest, die mindestens 2 mit (Meth)acrylsäure veresterte Thiolgruppen im Molekül besitzen, unter den Bedingungen der radikalischen Polymerisation reagieren läßt, mit der Maßgabe, daß das numerische Verhältnis von Mercaptogruppen zu vorhandenen Doppelbindungen ≦ 1 sein soll. Vorzugsweise ist das Verhältnis < 0,5.
Die Alkylthiole (A) sind vorzugsweise so aufgebaut, daß - räumlich gesehen - eine hohe relative Dichte an Schwefelatomen vorliegt. Dies läßt sich z.B. bei Verwendung eines verzweigten oder eines cyclischen Gerüstes erreichen. Beispiel dafür ist das Neopentylgerüst. Zur Einführung der Thiolgruppen kann man dabei vorteilhaft von vorhandenen Hydroxygruppen ausgehen, die man beispielsweise mit Thioglykolsäure verestert. Auf diese Weise läßt sich z.B. Pentaerythrit mit Thioglykolsäure zum Pentaerythrittetrathioglykolat (Verbindung A-I) verestern. Ähnlich lassen sich auch cyclische Polyole wie z.B. Zuckeralkohole verestern.
Die Alkylpolythiolester (B) lassen sich im allgemeinen mit der Formel I widergeben.

$$CH_2 = \overset{\overset{\large R}{|}}{C} - \overset{\overset{\large O}{\|}}{C} - S - Y - S - \overset{\overset{\large O}{\|}}{C} - \overset{\overset{\large R}{|}}{C} = CH_2 \qquad (I)$$

worin R für Wasserstoff oder Methyl steht und Y einen gegebenenfalls Ether- oder Thioethergruppen enthaltenden, gegebenenfalls verzweigten, gegebenenfalls cyclischen Alkylrest mit 2 - 24, vorzugsweise 2 bis 12 Kohlenstoffatomen darstellt, der gegebenenfalls mit weiteren Resten

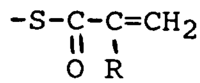

substituiert sein kann.

Auch hier gilt, daß eine hohe räumliche Dichte der Schwefelatome im Molekül vorteilhaft ist. Genannt sei beispielsweise Ethandithioldimethacrylat, Propandithioldimethacrylat.

Durchführung der Erfindung

Die Ausgangsverbindungen (A) und (B) sind an sich bekannt bzw. sie können in an sich bekannter Weise bzw. in Anlehnung an an sich bekannte Verfahren, hergestellt werden.

Bei der Umsetzung der Verbindungen (A) und (B) unter den bekannten Bedingungen der radikalischen Polymerisation (vgl. H. Rauch-Puntigam, Th. Völker, Acryl- und Methacrylverbindungen, Springer-Verlag Berlin, Heidelberg, New York 1967) ist sowohl mit Polymerisation als auch mit Polyaddition zu rechnen.

Als Initiatoren kommen die an sich bekannten Radikal-Initiatoren, beispielsweise Azoinitiatoren wie Azo-bis-(isobutyronitril) (AIBN) in den üblichen Mengen, beispielsweise 0,1 bis 1 Gew.-% bezogen auf die Monomeren, infrage.

Die Polymerisation kann z.B. als Substanzpolymerisation durchgeführt werden, wobei - in Anlehnung an die Substanzpolymerisation von PMMA - zwischen zwei Glasplatten polymerisiert wird. Es ist aber z.B. auch Lösungspolymerisation möglich. Die aus den Komponenten (A) und (B) aufgebauten Kunststoffe K können noch die aus der Acrylatchemie bekannten Additive wie Stabilisatoren, Trennmittel gegfls. auch Farbmittel enthalten (vgl. R. Gaechter und H. Müller, Taschenbuch der Kunststoff-Additive, Hanser-Verlag 1979).

Man geht bei der Substanzpolymerisation zweckmäßig so vor, daß man eine homogene Mischung aus den Komponenten (A) und (B) und dem Initiator herstellt, diese zwischen Glasplatten verfüllt wird. Das Anspringen der Polymerisation erreicht man durch Energiezufuhr, beispielsweise durch energiereiche Strahlung, insbesondere mit UV-Licht oder durch Erwärmen, zweckmäßig im Wasserbad und über einen größeren Zeitraum, beispielsweise 24 - 30 Stunden. Zweckmäßig führt man die Polymerisation bei ansteigender Temperatur, beispielsweise im Temperaturintervall 40 - 90 Grad C durch.

Man erhält so den Kunststoff K in Form einer völlig klaren, farblosen, harten Platte.

Die erfindungsgemäßen Kunststoffe K eignen sich sehr gut für eine Vielzahl von Anwendungen, vor allem auf dem Gebiet der Optik. Es lassen sich daraus z.B. Prismen, Linsen, Brillengläser und sonstige optische Komponenten herstellen.

Wie ein Vergleich mit einem Homopolymerisat aus den (Meth)acrylestern (B) zeigt, übertreffen die erfindungsgemäßen Kunststoffe K diese Homopolymerisate in ihren mechanischen Eigenschaften deutlich.

Copolymerisate aus (A) mit den (B) entsprechenden (Meth)acrylestern der (schwefelfreien) Polyole, ergeben wesentlich schlechtere optische Eigenschaften.

Die folgenden Beispiele dienen zur Erläuterung der Erfindung. Die Bestimmung der Brechzahl und der Abbezahl geschieht mit dem Abbe-Refraktometer. Die Abbezahl kann der Dispersionstabelle entnommen werden (vgl. DIN 53 491; Ullmanns Encyclopädie der Techn. Chemie, 4. Auflage, Bd. 15, S. 368, Verlag Chemie 1978).

BEISPIELE

Beispiel 1:

Polymerisat aus Ethandithioldimethacrylat und Pentaerythrittetrathioglykolat im Molverhältnis 1 : 0,25.

Eine Lösung von 23 g Ethandithioldimethacrylat, 10,8 g Pentaerythrittetrathioglykolat und 135 mg Azo-bis(isobutyronitril) wird zwischen zwei Glasplatten (ca. 90 x 120 x 3mm) verfüllt und innerhalb 28 Stunden in einem Wasserbad mit einem Temperaturverlauf von 40 - 90 Grad C polymerisiert. Die erhaltene Kunststoffplatte ist hart, klar und farblos. $n_D$ = 1,5989; Abbezahl = 38,9. Bei einem Molverhältnis der Komponenten B : A wie 1 : 0,125 erhält man ein Produkt mit der Brechungszahl 1,6024.

Beispiel 2:

(Vergleich) Polymerisat aus Ethylenglykoldimethacrylat und Pentaerythrittetrathioglykolat

Eine Monomermischung aus 23,8 g Ethylenglykoldimethacrylat, 13,0 g Pentaerythrittetrathioglykolat und 148 mg Azo-bis(isobutyronitril) wird wie in Beispiel 1 beschrieben polymerisiert. Das ebenfalls klare und harte Polymerisat zeigt eine Brechzahl $n_D$ = 1,5356 und eine Abbezahl von 51.

Beispiel 3:

(Vergleich) Homopolymerisat aus Ethandithioldimethacrylat

Das Homopolymerisat wurde analog den Beispielen 1 und 2 hergestellt. Man erhält ein klares, aber sehr sprödes Material. Brechzahl $n_D$ 1,6075, Abbezahl 35.

Beispiel 4:

Polymerisat aus Propandithioldimethacrylat, 1,9-Bis(methacrylthio)-3,7-dithianonan und Pentaerythrittetrathioglykolat im Molverhältnis 2 : 1 : 0,75

Eine Lösung von 16,3 g Propandithioldimethacrylat, 12,1 g 1,9-Bis(methacrylthio)-3,7-dithianonan, 10,8 g Pentaerythrittetrathioglykolat und 157 mg Azobis(isobutyronitril) wird zwischen zwei Glasplatten (ca. 90 x 120 x 3 mm) verfüllt und innerhalb 28 Stunden in einem Wasserbad mit einem Temperaturverlauf von 40 - 90 Grad C polymerisiert. Die erhaltene Kunststoffplatte ist hart, klar und farblos. Brech- und Abbezahl s. Tab., die Schlagzähigkeit beträgt 16,1 $kJ/m^2$ (bestimmt nach ISO 179).

Beispiel 5:

Polymerisat aus Propandithioldimethacrylat und Pentaerythrittetrathioglykolat im Molverhältnis 1 : 0,125.

Wie in Beispiel 4 aber unter Verwendung von 30,4 g Propandithioldimethacrylat, 6,75 g Pentaerythrittetrathioglykolat und 148 mg Azobis(isobutyronitril). Es entsteht eine harte, klare und farblose Platte. Brechzahl und Abbezahl s. Tab.

Beispiel 6:

Polymerisat aus Ethandithioldimethacrylat, 1,5-Bis(methacrylthio)-3-thiapentan und Pentaerythrittetrathioglykolat im Molverhältnis 1 : 1 : 0,25.

Wie in Beispiel 4 aber unter Verwendung von 17,4 g 2,5-Bis(methacrylthio)-3-thiapentan, 13,8 g Ethandithioldimethacrylat, 6,45 g Pentaerythrittetrathioglykolat und 150 mg Azobis(isobutyronitril). Es entsteht eine harte, klare und farblose Platte; Brechzahl und Abbezahl s. Tab.

Beispiel 7:

Polymerisat aus Propandithioldimethacrylat und Glycerintrithioglykolat im Molverhältnis von 1 : 0,166.

Wie in Beispiel 4, nur unter Verwendung von 34,8 g 1,3-Propandithioldimethacrylat, 7,4 g Glycerintrithioglykolat und 169 mg Azobis(isobutyronitril). Es entsteht eine harte, klare und farblose Platte; Brechzahl und Abbezahl s. Tab.

Beispiel 8:

Polymerisat aus Propandithioldimethacrylat und Pentaerythrittetrakismercaptopropionat im Molverhältnis von 1 : 0,125.

Wie in Beispiel 4 nur unter Verwendung von 36,5 1,3-Propandithioldimethacrylat, 9,1 g Pentaerythrittetrakismercaptopropionat und 185 mg Azobis(isobutyronitril). Es entsteht eine harte, klare und farblose Platte;

Brechzahl und Abbezahl s. Tab.

*TABELLE: Eigenschaften der Polymerisate*

| Beisp. | Alkylpolythiolester (B) | Alkylthiol (A) | Molverhältnis | Brechzahl $n_D^{20}$ | Abbezahl |
|---|---|---|---|---|---|
| 1 | Ethandithioldimethacrylat | Pentaerythrit-tetrathioglykolat | 1 : 0,25 | 1,5989 | 38,6 |
| | Ethandithioldimethacrylat | Pentaerythrit-tetrathioglykolat | 1 : 0,125 | 1,6024 | -- |
| 4. | Propandithioldimethacrylat/Bis-(methacrylthio) dithianonan | Pentaerythrit-tetrathioglykolat | 2 : 1 : 0,75 | 1,5978 | 39,3 |
| 5. | Propandithioldimethacrylat | Pentaerythrit-tetrathioglykolat | 1 : 0,125 | 1,5946 | 41 |
| 6. | Ethandithioldimethacrylat/Bis-(methacrylthio)-thiapentan | Pentaerythrit-tetrathioglykolat | 1 : 1 : 0,25 | 1,6084 | 37,8 |
| 7. | Propandithioldimethacrylat | Glycerintrithioglykolat | 1 : 0,166 | 1,5953 | 40 |
| 8. | Propandithioldimethacrylat | Pentaerythrit-tetrakismercaptopropionat | 1 : 0,125 | 1,5893 | 40 |
| Vergleichsbeispiele: | | | | | |
| 2. | Ethandithioldimethacrylat | ---- | ---- | 1,6057 | 35 spröd. Mat. |
| 3. | Ethylenglykoldimethacrylat | Pentaerythrit-tetrathioglykolat | 1 : 0,25 | 1,5356 | 51 |

## Patentansprüche

1. Hochlichtbrechende Kunststoffe hergestellt durch Umsetzung von Alkylpolythiolen mit mehrfach ungesättigten Monomeren,
   dadurch gekennzeichnet,
   daß man Alkylthiole (A) mit mindestens 2 und bis zu 20 Kohlenstoffatomen, die mindestens 2 Thiolgruppen im Molekül enthalten, mit Alkylpolythiolestern (B) mit mindestens 2 und bis zu 14 Kohlenstoffatomen im Alkylrest, die mindestens 2 mit (Meth)acrylsäure veresterte Thiolgruppen im Molekül besitzen, unter den Bedingungen einer radikalinitiierten Polymerisation umsetzt, mit der Maßgabe, daß das numerische Verhältnis von Mercaptogruppen in (A) zu den Doppelbindungen in (B) $\leq$ 1 beträgt.

**2.** Hochlichtbrechende Kunststoffe gemäß Anspruch 1, dadurch gekennzeichnet, daß man als Alkylthiol (A) Pentaerythrittetrathioglykolat einsetzt.

**3.** Hochlichtbrechende Kunststoffe gemäß den Ansprüchen 1 und 2, dadurch gekennzeichnet, daß man als Alkylpolythiolester (B) Ethandithioldimethacrylat einsetzt.

**4.** Hochlichtbrechende Kunststoffe gemäß den Ansprüchen 1 und 2, dadurch gekennzeichnet, daß man als Alkylpolythioester (B) Propandithiolmethacrylat einsetzt.